# EUROPEAN PATENT APPLICATION

(11) **EP 4 764 468 A1**
(43) Date of publication of application: **24.06.2026**
(21) Application number: 25222820.0
(22) Date of filing: 12.12.2025
(51) Int. Cl.: G01N 21/90

(54) **INSPECTION METHOD AND UNIT FOR INSPECTING A LIQUID OR SEMILIQUID SUBSTANCE IN A CONTAINER**

(30) Priority: 17.12.2024 IT 202400028665
(71) Applicant: G.D S.p.A., 40133 Bologna (IT)
(72) Inventor: AMBROSINI, Davide, BOLOGNA (IT); FRANGIAMONE, Lorenzo, BOLOGNA (IT); SOLAROLI, Matteo, BOLOGNA (IT); CAVAGNI, Massimo, SOLIGNANO (PR) (IT); FRANCIA, Michele, SOLIGNANO (PR) (IT)
(74) Representative: Bacchini, Davide

(57) **Abstract**

An inspection method for inspecting a liquid or semiliquid substance in a container (2), said container (2) extending along a principal direction (P) between a top end and a bottom end, said method comprising the following steps:
setting the container (2) into rotation about a rotation axis;
interrupting the rotation of the container (2);
illuminating at least a part of the container (2) where the free surface of the substance is present so that at least one light component is reflected from the free surface;
once the rotation of the container (2) is interrupted, acquiring at least one image of the illuminated container (2) by means of a camera (22); said camera (22) being positioned inclined relative to the principal direction (P) of the container (2) in the inspection zone (I) in such a way that its field of vision (FoV) captures said at least one light component reflected from the free surface;
processing said at least one acquired image by applying at least one vision algorithm so as to identify foreign bodies floating at the free surface of the substance.

## Description

The present invention relates to an inspection method and unit for inspecting a liquid or semiliquid substance in a container.

The present invention falls within the technical field of automatic machines for inspecting containers containing a predetermined amount of product, in particular a liquid/semiliquid product. In the field of container inspection, multiple inspection operations are known, depending on the part of the container or content to be inspected.

In this context, inspection systems are known that carry out a particle control of a substance contained inside the container. In the case of liquid or semiliquid substances, this type of inspection takes place by rotating the container and, subsequently, capturing images thereof. It is in fact known that, by rotating the container and consequently the liquid or semiliquid substance therein, it is observed that the free surface of the substance (also known as the "meniscus") takes the form of a rotating paraboloid. Typically, this involves any floating foreign bodies being dragged downwards. The traditional particle inspection therefore detects the presence of such foreign bodies away from the free surface.

However, the Applicant has found that under certain conditions, situations occur whereby some foreign bodies are not dragged downwards by the rotation vortex, but remain at the free surface. This occurs for example due to the nature of some foreign bodies or for specific applications in which the rotation speed is limited (for example, for rectangular bottles in which the rotation speed is around 40 revolutions per minute).

Traditional particle inspection is not capable of carrying out its task correctly in such cases.

There is therefore a need for a solution capable of carrying out an accurate particle inspection of the free surface region of a substance.

The technical task of the present invention is thus to provide an inspection method and unit for inspecting a liquid or semiliquid substance in a container which are capable of overcoming the drawbacks arising from the prior art.

The object of the present invention is therefore to propose an inspection method and unit for inspecting a liquid or semiliquid substance in a container, which are capable of inspecting the free surface zone of the substance.

A further object of the present invention is therefore to provide an inspection method and unit for inspecting a liquid or semiliquid substance in a container which are versatile and easily applicable in different contexts.

The specified technical task set and objects are substantially achieved by an inspection method and unit for inspecting a liquid or semiliquid substance in a container comprising the technical features as set out in one or more of the appended claims. The dependent claims correspond to possible embodiments of the invention.

In particular, the specified technical task and the specified objects are achieved by an inspection method for inspecting a liquid or semiliquid substance in a container, subject matter of the present invention.

The container has an extension along a principal direction between a top end and a bottom end.

The method comprises a step of setting the container into rotation about a rotation axis.

Thereafter, the method includes interrupting the rotation of the container. By inertia, the liquid or semiliquid substance continues to rotate.

The method provides for illuminating at least a part of the container where the free surface of the substance is present in such a way that at least one light component is reflected from the free surface.

Upon the interruption of the rotation of the container, at least one image of the illuminated container is acquired by a camera. The camera is positioned inclined relative to the principal direction of the container in such a way that its field of vision captures said at least one light component reflected from the free surface.

The method then comprises a step of processing said at least one acquired image by applying at least one vision algorithm so as to identify foreign bodies floating at the free surface of the substance.

In accordance with an embodiment, illustrated in the figures, the camera is positioned in such a way that its optical axis is inclined relative to a direction orthogonal to the principal direction of the container.

Preferably, the optical axis is inclined by an angle of inclination comprised between 20° and 45°.

In accordance with an embodiment, the illumination takes place in such a way that said at least one light component has an inclination relative to the direction orthogonal to the principal direction of the container that is substantially equal in value to the angle of inclination of the optical axis.

In accordance with a first embodiment of the illumination, this takes place by means of an illuminator configured to emit direct light having an illumination direction. The illuminator is positioned in such a way that the illumination direction intercepts the free surface of the substance.

In accordance with a second embodiment of the illumination, this takes place by means of an illuminator comprising a diffuser. The illuminator is positioned in such a way that at least one diffused light component intercepts the free surface of the substance.

In accordance with an embodiment, illustrated in the figures, the method provides a step of advancing the container along a conveyance path; said steps of setting the container into rotation, illuminating the container and acquiring at least one image of the container taking place along the conveyance path.

Preferably, the advancement of the container along the conveyance path takes place in a continuous mode.

Preferably, the step of advancing the container takes place on one or more rotating carousels. The inspection zone extends along an arc of a carousel, and the inspection method comprises a step of tracking the container by means of the camera.

In particular, the specified technical task and the specified objects are achieved by an inspection unit for inspecting a liquid or semiliquid substance in a container, subject matter of the present invention.

The container has an extension along a principal direction between a top end and a bottom end. The method comprises a step of setting the container into rotation about a rotation axis.

The inspection unit comprises a first station configured to set the container into rotation about a rotation axis.

The inspection unit comprises a second image acquisition station, situated at or downstream of the first rotation station.

The second station in turn comprises an inspection zone and a vision system operatively active thereon.

The inspection zone is configured in such a way that, during the operation of the inspection unit, the container is oriented with its principal direction substantially parallel to a reference axis.

The vision system comprises a camera configured to acquire at least one image of the container in the inspection zone.

The vision system comprises an illuminator configured to illuminate at least a part of the inspection zone intended for a part of the container where the free surface of the substance is present.

The camera is positioned inclined relative to the reference axis in such a way that its field of vision captures at least said part of the illuminated inspection zone intended for the part of the container where the free surface of the substance is present.

The inspection unit comprises processing means for processing said at least one acquired image, configured to apply at least one vision algorithm in order to detect foreign bodies floating at the free surface of the substance.

In accordance with an embodiment, the camera is positioned in such a way that its optical axis is inclined relative to a direction that is substantially orthogonal to the reference axis.

Preferably, the optical axis is inclined by an angle of inclination comprised between 20° and 45°.

In accordance with an embodiment, the illuminator is configured in such a way that at least one light component has an inclination relative to a direction orthogonal to the reference axis that is substantially equal to the angle of inclination of the optical axis.

In accordance with an embodiment, the inspection unit comprises advancement means for advancing the container along a conveyance path extending through said first and second stations.

Preferably, the advancement means comprise one or more rotating carousels. The inspection zone extends along an arc of a carousel. At least the camera is configured to track the container in movement along the inspection zone.

Further features and advantages of the present invention will become more apparent from the following detailed description of preferred embodiments thereof, made with reference to the accompanying drawings, in which:

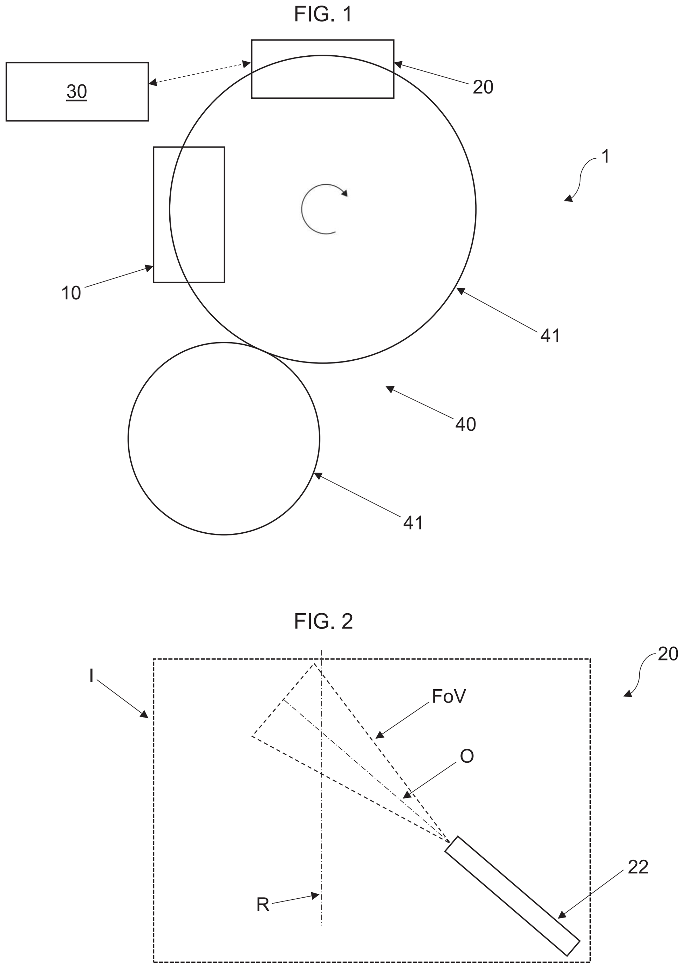

- Figure 1 illustrates a schematic view of an inspection unit in accordance with the invention;
- Figure 2 illustrates a schematic view of an inspection zone of an image acquisition station of the inspection unit of Figure 1;
- Figures 3 and 4 illustrate schematic views of two alternative embodiments of the inspection zone of the inspection unit of Figure 1, in an operating condition.

With reference to the appended figures, an inspection unit in accordance with the invention has been indicated in its entirety by the reference number 1. The unit 1 is configured to inspect a liquid or semiliquid substance in a container 2. That is, the inspection unit according to the invention operates a particle type control on the liquid or semiliquid substance. The present invention finds particular, but not exclusive, application in the pharmaceutical sector.

To this end, "liquid or semiliquid substance" means any substance for which, when set into rotation, its free surface (also known as the "meniscus") takes the form of a rotating paraboloid or the like. For example, a substance is intended having a degree of viscosity comprised between 10⁻³ poise and 10² poise at room temperature.

To this end, "containers" means both flexible film containers such as bags, and rigid or semi-rigid containers.

Such containers 2 extend along a principal direction "P" between a top end and a bottom end.

Suitably, the container 2 is provided with a filling opening.

Suitably, the containers 2 are made of transparent or semi-transparent material.

Suitably, the containers 2 enter the inspection unit 1 already capped.

The inspection unit 1 comprises a first rotation station 10. The first station 10 is configured to set the container 2 into rotation about a rotation axis. Operationally, the rotation axis is substantially parallel to the principal direction "P" of the container 2. Preferably, the rotation axis substantially coincides with the principal direction "P".

By rotating the container and consequently the substance therein, it is observed that the free surface of the substance (also known as the "meniscus") takes the form of a rotating paraboloid.

Preferably, the first station 10 comprises means for setting the container 2 into rotation. Such means are known in the art.

For example, such means can comprise a plate on which the lower end of the container rests, or a rod that grips the container at the top end, or a belt that acts on the side of the container 2, etc.

The rotation parameters vary greatly depending on the size and shape of the containers being inspected. By way of example, for standard containers with a diameter of 15÷20 millimetres, the rotation speed is typically 1500÷2000 revolutions per minute.

The inspection unit 1 comprises a second image acquisition station 20. The second station 20 is situated at or downstream of the first rotation station 10.

"At" means that the two stations substantially overlap and both operations (rotation and image acquisition) are carried out substantially in the same place, at distinct time intervals. This is for example the case of intermittent operation.

The second station 20 comprises an inspection zone "I" and a vision system 21 operatively active thereon.

Preferably, the container 2 is supported in such a way that, in the inspection zone "I", its principal direction "P" is substantially vertical.

The inspection zone "I" is configured in such a way that, during the operation of the inspection unit 1, the container 2 is oriented with its principal direction "P" substantially parallel to a reference axis "R". Preferably, the reference axis "R" substantially coincides with the principal direction "P" of the container 2, when the inspection unit 1 is in operation. In particular, the position assumed by the container 2 in the inspection zone "I" can be identified as a reference position.

The vision system 21 comprises a camera 22 configured to acquire at least one image of the container 2 in the inspection zone "I". Preferably, the camera 22 is configured to acquire at least two images of the container 2. This is because, as will be better detailed below, it is common practice to apply an image subtraction algorithm for the visual inspection of containers 2. Therefore, at least two images are necessary to carry out the subtraction operation.

More preferably, the camera 22 is configured to acquire a sequence of images of the container.

By way of example, if the container is a small bottle, the camera 22 can be configured to take an average of about 30 photographs in a time interval of 150 milliseconds.

The inspection unit 1 is configured to interrupt the rotation of the container 2 before acquiring at least one image of the container 2 by means of the camera 22. In this way, when the rotation of the container 2 is interrupted (thereby, the container 2 no longer rotates, while the substance therein continues to be in movement by inertia), the camera 2 is configured to acquire at least one image of the container 2.

For this reason, the present description distinguishes between rotation station 10 and inspection station 20, even when the container is rotated and then photographed in the same position of the inspection unit 1. The rotation is imparted only in the rotation station 10. Outside of the rotation station 10, the container 2 does not rotate anymore since there is no longer an external force to set it in rotation.

The vision system 21 comprises an illuminator 23 configured to illuminate at least a part of the inspection zone "I" corresponding to a part of the container 2 where the free surface of the substance is present (during the operation of the inspection unit 1). That is, the illuminator 23 is configured to at least partially illuminate the container 2 in the inspection zone "I" in such a way that at least one light component is reflected from the free surface of the substance.

In turn, the camera 22 is positioned inclined relative to a direction normal to the reference axis "R" in such a way that its field of vision (indicated in the figures as "FoV") captures at least the part of the illuminated inspection zone "I", corresponding to a part of the container 2 where the free surface of the substance is present (during the operation of the inspection unit 1). Thereby, the camera 22 captures the light component reflected from the free surface of the substance.

That is, the camera 22 and the illuminator 23 are mutually arranged at the inspection zone "I" in such a way at least one light component is reflected from the free surface of the substance and captured by the camera 22. Thereby, it is possible to carry out a targeted particle inspection in the region of the free surface of the substance and to identify those floating foreign bodies which, by their nature or by specific inspection conditions (e.g., rectangular containers as mentioned above), do not move away from the free surface with the rotation of the container.

Although the stirring of the substance is not able to move foreign bodies away from the zone of the free surface, it remains functional for the purposes of the present invention since the foreign body moves over time and assumes different positions in the sequential photographs that are taken.

The inspection unit 1 further comprises processing means 30 of the acquired images. The processing means 30 are configured to apply at least one vision algorithm so as to detect foreign bodies floating at the free surface of the substance.

For the purposes of the present invention, the vision algorithm applied is of a type known in the field of particle inspection. A person skilled in the art is aware of the libraries and algorithms used in this context, therefore they will not be further described in detail.

By way of example, the following image processing algorithms may be applied individually or cumulatively: image subtraction; morphological filtering to eliminate noise; derivative operators to detect edges and transitions between areas of different light intensity; image segmentation to isolate particles from the background.

By way of example, commercial libraries can be used for computer vision and image processing, such as OpenCV (Open Source Computer Vision). Preferably, the camera 22 and the illuminator 23 are arranged on two opposite sides of the inspection zone "I" relative to the reference axis "R", and consequently to the reference position in which the container is intended to be present during the operation of the inspection unit 1.

In accordance with an embodiment, the camera 22 is positioned in such a way that its optical axis "O" is inclined by an angle of inclination relative to a direction orthogonal to the reference axis "R".

Suitably, such an angle of inclination can take values comprised between 20° and 45°.

In turn, the illuminator 23 is configured in such a way that at least one light component has an inclination relative to a direction orthogonal to the reference axis "R" substantially equal to the angle of inclination of the optical axis "O".

Such angles are suitably established so that the light component in question is reflected by the free surface of the substance and vary according to the specifications of each application.

It should be noted that the angle of inclination of the light component relative to the reference axis "R" corresponds to the angle of reflection of the light component on the free surface of the substance.

The concepts of "field of vision" and "optical axis" of a camera are known per se and will not be further specified.

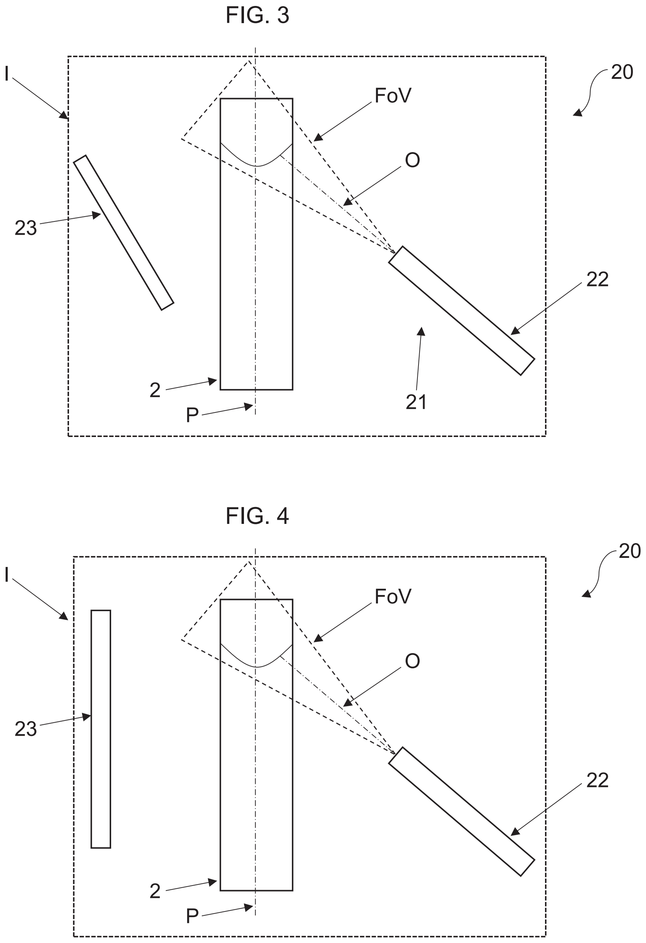

In accordance with an embodiment, illustrated in Figure 3, the illuminator 23 is configured to emit direct light. In this case, it is arranged inclined relative to the reference axis in such a way that at least one light component intercepts the free surface of the substance and is reflected towards the camera 22.

In an alternative embodiment, illustrated in Figure 4, the illuminator 23 comprises a diffuser. In this case, the illuminator 23 can also be arranged with extension parallel to the reference axis, i.e., parallel to the principal direction.

Preferably, the camera 22 and the illuminator 23 are directed towards the reference axis, i.e., towards the container, from the bottom upwards. That is, they act laterally and from the bottom of the container.

In accordance with an embodiment, the inspection unit 1 comprises advancement means 40 for advancing the container along a conveyance path extending through the first rotation station 10 and the second image acquisition station 20.

Suitably, the inspection unit 1 therefore works with a flow of containers 2 and is suitable for high-speed conveyance situations.

Preferably, the advancement means 40 are configured for continuous (i.e., non-intermittent) operation.

Preferably, the advancement means 40 are configured to support the container 2 with its principal direction "P" substantially vertical.

In the preferred embodiment, illustrated in the figures, the advancement means 40 comprise one or more rotating carousels 41.

Preferably, the first station 10 is situated on a carousel 41.

Preferably, the second station 20 is situated on a carousel 41.

Preferably, the first station 10 and the second station 20 are situated on the same carousel 41 in sequence according to the rotation direction.

In accordance with an embodiment, the first station 10 comprises a rotation zone. The means for setting the container into rotation are operatively active on such rotation zone.

Preferably, the rotation zone extends along an arc of a carousel.

In accordance with an embodiment, the inspection zone "I" extends along an arc of a carousel. At least the camera 22 is configured to track the container in movement along the inspection zone "I". More preferably, the entire vision system 21 (therefore also the illuminator 23) moves in tracking.

In an alternative embodiment (not shown), the advancement means 40 comprise an in-line conveyor.

The present invention further relates to an inspection apparatus for inspecting a container.

The inspection apparatus comprises a plurality of units for checking the container 2. At least one of said units is an inspection unit 1 according to the present invention, as previously described.

Preferably, the units are distributed along one or more carousels 41.

A further object of the present invention is a method for inspecting a liquid or semiliquid substance in a container 2, which will be described below. Such a method is advantageously implemented by an inspection unit 1 according to what has been described above.

In particular, the inspection method in accordance with the invention operates a particle type control.

To this end, "liquid or semiliquid substance" means any substance for which, when set into rotation, its free surface (also known as the "meniscus") takes the form of a rotating paraboloid or the like. For example, a substance is intended having a degree of viscosity comprised between 10⁻³ poise and 10² poise at room temperature.

To this end, "containers" means both flexible film containers such as bags, and rigid or semi-rigid containers.

Such containers 2, as mentioned above, extend along a principal direction "P" between a top end and a bottom end.

Suitably, the containers 2 are made of transparent or semi-transparent material.

The steps of the inspection method are described below.

The container 2 is set into rotation about a rotation axis which is substantially parallel to its principal direction "P". Preferably, the container 2 is set into rotation about its principal direction "P".

By rotating the container 2 and consequently the substance therein, it is observed that the free surface of the substance (also known as the "meniscus") takes the form of a rotating paraboloid.

Preferably, the step of setting the container 2 into rotation takes place in the first rotation station 10 of the inspection unit 1 described above.

The rotation parameters vary greatly depending on the size and shape of the containers being inspected. By way of example, for standard containers with a diameter of 15÷20 millimetres, the rotation speed is typically 1500÷2000 revolutions per minute.

The method comprises a step of interrupting the rotation of the container 2.

The method comprises a step of illuminating the container 2 in such a way that at least a part thereof where the free surface of the substance is present is illuminated. That is, the container 2 is illuminated in such a way that at least one light component is directed towards (i.e., intercepts) the free surface of the substance.

Thereby, at least one light component is reflected from the free surface of the substance.

Preferably, such a step takes place by means of an illuminator 23 as previously described.

When the rotation of the container 2 is interrupted (thereby, the container 2 no longer rotates, while the substance therein continues to be in movement by inertia), the method comprises a step of acquiring at least one image of the illuminated container 2, by means of a camera 22. Preferably, at least two images of the container 2 are acquired for the reasons already specified above. More preferably, a sequence of images is acquired.

The camera 22 is positioned inclined relative to the principal direction "P" of the container 2 in such a way that its field of vision captures at least the part of the container 2 where the free surface of the substance contained therein is present.

Thereby, the light component reflected from the free surface is captured by the camera 22 and the image is acquired correctly.

In summary, the illumination of the container 2 and the positioning of the camera 22 take place in such a way that at least one light component is reflected from the free surface of the substance and captured by the camera 22.

Thereby, it is possible to carry out a targeted particle inspection in the region of the free surface of the substance and to identify those floating particles which, by their nature or by specific inspection conditions (e.g., rectangular containers as mentioned above), do not move away from the free surface with the rotation of the container.

Although the stirring of the substance is not able to move foreign bodies away from the zone of the free surface, it remains functional for the purposes of the present invention since the foreign body moves over time and assumes different positions in the sequential photographs that are taken.

Preferably, the step of illuminating the container 2 and the step of acquiring at least one image of the illuminated container 2 take place at an inspection zone "I". The illumination of the container 2 and the positioning of the camera 23 take place with reference to the position assumed by the container 2 in the inspection zone "I". That is, the principal direction "P" of reference for these steps is the principal direction "P" of the container 2 when it is in the inspection zone "I".

Preferably, in the inspection zone "I", the camera 22 and illuminator 23 are arranged, as specified above.

As detailed below, the inspection zone "I" can be downstream of an zone in which the container 2 is set into rotation or can be contextual thereto.

In the preferred embodiment, the container 2 is set into rotation in a zone, after which it is brought at an inspection zone "I". Before it reaches the inspection zone "I", the rotation is interrupted. That is, the rotation of the container 2 is stopped before or at the same time as the conveyance to the inspection zone "I". In any case, the container 2 arrives in the inspection zone "I" already stopped (relative to the rotation previously set). In particular, the rotation is set to the container 2 in the first station 10 of the inspection unit 1. Once it exits from said first station 10, a rotation is no longer set to the container 2.

With rotation interrupted and in the inspection zone "I", the container 2 is illuminated and at least one image is acquired as previously described. Preferably, in the inspection zone "I" the container 2 is supported with its principal direction "P" substantially vertical.

The embodiment described is particularly suitable for a continuous conveyance of the container 2.

Preferably, the camera 22 and the illuminator 23 are part of the second station 20 of the inspection unit 1 described above.

In an alternative embodiment, the steps of setting the container into rotation, illuminating it and acquiring images thereof occur in the same place (for example in a single station), but at different time intervals. That is, the container 2 does not advance in the space between the rotation step and the image acquisition step.

This embodiment is particularly suitable for an intermittent conveyance of the container 2.

The acquired image is processed by applying at least one vision algorithm so as to detect foreign bodies floating at the free surface of the substance. Preferably, the acquired images are a sequence of images and are processed by applying at least one aforesaid vision algorithm.

Preferably, the processing occurs by means of the processing means 30 of the inspection unit 1 described above.

For the purposes of the present invention, the vision algorithm applied is of a type known in the field of particle inspection. A person skilled in the art is aware of the libraries and algorithms used in this context, therefore they will not be further described.

By way of example, the following image processing algorithms may be applied individually or cumulatively: image subtraction; morphological filtering to eliminate noise; derivative operators to detect edges and transitions between areas of different light intensity; image segmentation to isolate particles from the background.

By way of example, commercial libraries can be used for computer vision and image processing, such as OpenCV (Open Source Computer Vision). Suitably, the containers are capped before being inspected (i.e., before being set in rotation).

In accordance with an embodiment, the camera 22 is positioned in such a way that its optical axis "O" is inclined relative to a direction orthogonal to the principal direction "P" of the container 2. Preferably, as specified above, the optical axis "O" is inclined relative to a direction orthogonal to the principal direction "P" of the container 2 when it is in the inspection zone "I".

Preferably, the optical axis "O" is inclined by an angle of inclination comprised between 20° and 45°.

In turn, the illumination of the container 2 takes place in such a way that at least one light component has an inclination relative to the principal direction "P" that is substantially equal to the angle of inclination of the optical axis "O". Such angles are suitably established in such a way that the light component in question is reflected from the free surface of the substance.

It should be noted that the angle of inclination of the light component relative to the principal direction "P" of the container 2 corresponds to the angle of reflection of the light component on the free surface of the substance.

The concepts of "field of vision" and "optical axis" of a camera are known per se and will not be further specified.

In accordance with an embodiment, the illuminator 23 is configured to emit direct light having an illumination direction. In this case, the illuminator 23 is positioned in such a way that the illumination direction intercepts the free surface of the substance.

That is, the lighting direction is inclined relative to a direction normal to the principal direction of the container 2.

In an alternative embodiment, the illuminator 23 comprises a diffuser. In this case, the illuminator 23 is positioned in such a way that at least one diffused light component intercepts the free surface of the substance. Suitably, the illuminator 23 can also be arranged extending parallel to the principal direction.

In accordance with an embodiment, the inspection method comprises a step of advancing the container 2 along a conveyance path. The steps of the inspection method described above take place along the conveyance path.

Preferably, the advancement step is such that the container 2 is supported with its principal direction "P" substantially vertical.

Preferably, the advancement step occurs by means of advancement means 40, previously described.

Preferably, the advancement of the container 2 along the conveyance path takes place in continuous mode (and not intermittently). In this case, at least the camera 22 is configured to track the container in movement along the inspection zone "I". The tracking is such that the mutual positioning, in particular the angles, described above are kept unchanged.

Preferably, the illuminator 23 also tracks the container.

In particular, the conveyance path extends through the rotation station 10 and the image acquisition station 20.

In the preferred embodiment, illustrated in the figures, the container is conveyed on one or more rotating carousels 41.

Preferably, the rotation is imparted to the container at an arc of a carousel 41.

Preferably, the inspection zone "I" extends along an arc of a carousel 41. Preferably, rotation and image acquisition take place on the same carousel 41 sequentially in the rotation direction.

Preferably, the station 10 and the station 20 are situated on the same carousel 41 in sequence according to the rotation direction.

In an alternative embodiment (not illustrated), the conveyance takes place in line.

Advantageously, the inspection method and unit according to the invention are capable of carrying out an accurate particle inspection aimed at the free surface zone of the substance thanks to the provision of illumination and camera in the correct position.

Furthermore, the proposed inspection method and unit are versatile and easily usable in different inspection contexts and architectures. However, they find their best application in a continuous inspection context as described.

## Claims

1. An inspection method for inspecting a liquid or semiliquid substance in a container (2), said container (2) extending along a principal direction (P) between a top end and a bottom end, said method comprising the following steps:
setting the container (2) into rotation about a rotation axis;
interrupting the rotation of the container (2);
illuminating at least a part of the container (2) where the free surface of the substance is present so that at least one light component is reflected from the free surface;
once the rotation of the container (2) is interrupted, acquiring at least one image of the illuminated container (2) by means of a camera (22); said camera (22) being positioned inclined relative to the principal direction (P) of the container (2) in such a way that its field of vision (FoV) captures said at least one light component reflected from the free surface;
processing said at least one acquired image by applying at least one vision algorithm so as to identify foreign bodies floating at the free surface of the substance.

2. The inspection method according to claim 1, wherein the camera (22) is positioned in such a way that its optical axis (O) is inclined relative to a direction orthogonal to the principal direction (P) of the container (2).

3. The inspection method according to claim 2, wherein the optical axis (O) is inclined by an angle of inclination comprised between 20° and 45°.

4. The inspection method according to claim 3, wherein the illumination takes place in such a way that said at least one light component has an inclination relative to the direction orthogonal to the principal direction (P) of the container (2) that is substantially equal to the angle of inclination of the optical axis (O).

5. The inspection method according to any one of the preceding claims, wherein the illumination takes place by means of an illuminator (23), said illuminator (23) being configured to emit direct light having an illumination direction;
said illuminator (23) being positioned in such a way that the illumination direction intercepts the free surface of the substance.

6. The inspection method according to any one of the preceding claims, wherein the illumination takes place by means of an illuminator (23) comprising a diffuser, said illuminator (23) being positioned in such a way that at least one diffused light component intercepts the free surface of the substance.

7. The inspection method according to any one of the preceding claims, comprising a step of advancing the container (2) along a conveyance path, said steps of setting the container (2) into rotation, illuminating the container (2) and acquiring at least one image of the container (2) taking place along the conveyance path.

8. The inspection method according to claim 7, wherein the advancement of the container (2) along the conveyance path takes place in a continuous mode.

9. The inspection method according to claim 7 or 8, wherein the step of advancing the container (2) takes place on one or more rotating carousels (41), said inspection zone (I) extending along an arc of a carousel (41), said inspection method comprising a step of tracking the container (2) by means of the camera (22).

10. An inspection unit (1) for inspecting a liquid or semiliquid substance in a container (2), said container (2) extending along a principal direction between a top end and a bottom end, said inspection unit (1) comprising:
a first rotation station (10), configured to set the container (2) into rotation about a rotation axis;
a second image acquisition station (20), situated by or downstream of the first station (10);
said second station (20) comprising an inspection zone (I) and a vision system (21) operatively active thereon, said inspection zone (I) being configured in such a way that, during the operation of the inspection unit (1), the container (2) is oriented with its principal direction (P) substantially parallel to a reference axis (R); said vision system (21) comprising a camera (22) configured to acquire at least one image of the container (2) in the inspection zone (I);
said vision system (21) comprising an illuminator (23) configured to illuminate at least a part of the inspection zone (I) intended for a part of the container (2) where the free surface of the substance is present;
said camera (22) being positioned inclined relative to the reference axis (R) in such a way that its field of vision captures at least said part of the illuminated inspection zone (I) intended for the part of the container (2) where the free surface of the substance is present;
processing means (30) for processing said at least one acquired image, configured to apply at least one vision algorithm in order to identify foreign bodies floating at the free surface of the substance.

11. The inspection unit (1) according to claim 10, wherein the camera (22) is positioned in such a way that its optical axis (O) is inclined relative to a direction substantially orthogonal to the reference axis.

12. The inspection unit (1) according to claim 11, wherein the optical axis (O) is inclined by an angle of inclination comprised between 20° and 45°.

13. The inspection unit (1) according to claim 12, wherein the illuminator (23) is configured in such a way that at least one light component has an inclination relative to a direction orthogonal to the reference axis that is substantially equal to the angle of inclination of the optical axis (O).

14. The inspection unit (1) according to any one of claims 10 to 13, comprising advancement means (40) for advancing the container (2) along a conveyance path extending through said first and second stations (10, 20).

15. The inspection unit (1) according to claim 14, wherein the advancement means (40) comprise one or more rotating carousels (41), said inspection zone (I) extending along an arc of a carousel (41), at least said camera (22) being configured to track the container in movement along the inspection zone (I).

16. An inspection apparatus for inspecting a container (2), comprising a plurality of units for checking the container (2); at least one of said checking units being an inspection unit (1) according to any one of claims 10 to 15.
